# EUROPEAN PATENT APPLICATION

(11) **EP 2 874 417 A1**
(43) Date of publication of application: **20.05.2015**
(21) Application number: 13851637.2
(22) Date of filing: 23.09.2013
(51) Int. Cl.: H04W 4/12

(54) **METHOD, APPARATUS AND DEVICE FOR ESTABLISHING CALL**

(30) Priority: 29.10.2012 CN 201210422368
(71) Applicant: Xiaomi Inc., Beijing 100085 (CN)
(72) Inventor: WANG, Wenlin, Beijing 100085 (CN); QIAO, Zhongliang, Beijing 100085 (CN); LIU, Xinyu, Beijing 100085 (CN)
(74) Representative: Hanna, Peter William Derek
(86) International application number: PCT/CN2013/083990
(87) International publication number: WO 2014/067367

(57) **Abstract**

Embodiments of the present invention relate to the communication field and provide a method, an apparatus, and a device for establishing a call. The method comprises: receiving a call request sent by a user through a terminal; determining push information corresponding to personalized information of the user; and sending the push information to the terminal. The embodiments of the present disclosure provide the method, apparatus and device for establishing a call so as to send push information corresponding to personalized information to a user according to the personalized information of the user after the user initiates a call, preventing a communication resource waste.

## Description

### TECHNICAL FIELD

The present disclosure generally relates to the telecommunication field, and more particularly to a method, an apparatus and a device for establishing a call.

### BACKGROUND

Communication means are getting increasingly richer with development of technology. Taking a telephone for example, there are typically a calling party and a called party in a call. The calling party is an initiator of the call, and the called party is a recipient. If at the moment the calling party makes a call, the called party cannot immediately answer it anyway, the call will be typically held on for a while. In the related art, during the time while the call is held on, a calling tone, for example, a beep or a piece of music provided by an operator is simply fed back to the calling party, and an incoming call prompt is presented in the telephone of the called party. After the called party received the call, the call tone for the calling party is stopped, and a call state is entered into. The call tone heard by the calling party before getting through the call is referred to as a ring-back tone. Generally, a ring-back tone is a segment of sound transmitted through a data network of a telecommunication operator. Technically speaking, the ring-back tone may be arbitrarily selected, for example, from a piece of music stored on a terminal or over a network, or even a video or an animation. Although duration time for the ring-back tone varies with different calling periods, the ring-back tone will generally last a period over a second level and is unavoidable. Similarly, in other telecommunication means such as Voice over Internet Protocol, Instant Message (IM) and the like, such a call waiting period similar to the ring-back tone is also presented.

In the related art, a calling user during a call waiting period is typically in a passively waiting state. During the passively waiting period, the user may only listen to a piece of ring-back music, even at the best times, and personalized demands of the user are not taken into consideration, thereby causing a waste of communication resources.

### SUMMARY

A method, an apparatus for establishing a call and a device are provided by embodiments of the present disclosure, which can send push information corresponding to personalized information to a user based on the personalized information of the user after the user initiates a call, thereby avoiding a waste of communication resources.

According to a first aspect, a method for establishing a call is provided by embodiments of the present disclosure, including:
receiving a call request sent from a user through a terminal;
determining push information corresponding to personalized information of the user; and
sending the push information to the terminal.

According to another aspect, another method for establishing a call is provided by embodiments of the present disclosure, including:
sending personalized information of a user to a call center; and
receiving push information corresponding to the personalized information of the user sent from the call center after a call request is sent to the call center.

According to still another aspect, an apparatus for establishing a call is provided by embodiments of the present disclosure, including:
a request receiving unit configured to receive a call request sent from a user through a terminal;
an information preparation unit configured to determine push information corresponding to personalized information of the user; and
an information sending unit configured to send the push information to the terminal.

According to still another aspect, another apparatus for establishing a call is provided by embodiments of the present disclosure, including:
an information reporting unit configured to send personalized information of a user to a call center; and
an information receiving unit configured to receive push information corresponding to the personalized information of the user sent from the call center after a call request is sent to the call center.

According to still another aspect, a device is provided by embodiments of the present disclosure, including:
one or more processors;
a memory; and
one or more modules are stored in the memory and configured to be executable by the one or more processors, wherein, the one or more modules have the following functions:
receiving a call request sent from a user through a terminal;
determining push information corresponding to personalized information of the user; and
sending the push information to the terminal.

According to still another aspect, another device is provided by embodiments of the present disclosure, including:
one or more processors;
a memory; and
one or more modules are stored in the memory and configured to be executable by the one or more processors, wherein, the one or more modules have the following functions of:
sending personalized information of a user to a call center; and
receiving push information corresponding to the personalized information of the user sent from the call center after a call request is sent to the call center.

It is to be understood that both the foregoing general description and the following detailed description are exemplary only and are not restrictive of the present disclosure.

It can be seen from the above technical solutions that, in the present disclosure, a call request sent from a user through a terminal is received; push information corresponding to personalized information of the user is determined; and the push information is sent to the terminal. Therefore, the corresponding push information is customized in respect to personalized information of a user, and the push information is sent to the user after the user initiates a call request. Thus, communication resources and time resources during the call waiting period are effectively utilized and the call waiting period is improved.

### BRIEF DESCRIPTION OF THE DRAWINGS

Fig. 1 is an exemplary flow chart of a method for establishing a call according to an embodiment of the present disclosure;
Fig. 2 is an exemplary flow chart of another method for establishing a call according to an embodiment of the present disclosure;
Fig. 3 is an exemplary flow chart of a method for establishing a call according to a specific embodiment of the present disclosure;
Fig. 4 is an exemplary flow chart of another method for establishing a call according to a specific embodiment of the present disclosure;
Fig. 5 is a block diagram illustrating an apparatus for establishing a call according to the present disclosure;
Fig. 6 is another block diagram illustrating an apparatus for establishing a call according to the present disclosure;
Fig. 7 is another block diagram illustrating an apparatus for establishing a call according to the present disclosure; and
Fig. 8 is a block diagram illustrating another apparatus for establishing a call according to the present disclosure;

Through the above accompany drawings, the specific embodiments of the disclosure have been shown, for which a more detailed description will be given as below. These drawings and textual description are not intended to limit the scope of the concept of the disclosure in any manner, but to explain the concept of the disclosure to those skilled in the art through particular embodiments.

### DETAILED DESCRIPTION

A method, an apparatus and a device for establishing a call are provided by embodiments of the present disclosure, which may send push information corresponding to personalized information to a user based on the personalized information of the user after the user initiates a call, thereby avoiding a waste of communication resources.

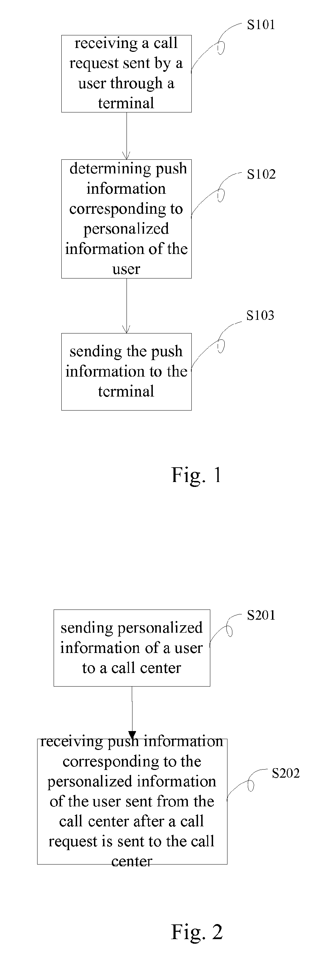

Referring to Fig.1, a method for establishing a call is provided by an embodiment of the present disclosure, including:
at S 101, a call request sent from a user through a terminal is received;
at S102, push information corresponding to personalized information of the user is determined; and
at S103, the push information is sent to the terminal.

Preferably, the step S102 of determining push information corresponding to personalized information of the user is performed in the following manner: personalized information of the user is acquired; and push information corresponding to the personalized information of the user is selected according to the personalized information of the user.

Preferably, push information that may be sent or interacted during the call waiting period is stored in advance, and personalized information of the user is acquired; and push information corresponding to the personalized information of the user is selected according to the personalized information of the user.

Preferably, the personalized information of the user refers to geographical location of the device of the user, and/or, a type of contents of desired push information preset by the user. If the device of the user is a mobile terminal, its geographical location may be obtained through a GPS (Global Positioning System), or a base station positioning function carried by the device of the user. The geographical location information needs to be reported to a service provider by the mobile phone, and a base station may send push information corresponding to the geographical location to the device of the user according to the geographical location. The type of contents of desired push information preset by the user may also be used to select corresponding push information. The above two kinds of personalized information may also be used at the same time. In case where neither of the above two kinds of personalized information is reported by the device of the user, or in case where push information cannot be selected according to the acquired personalized information, the push information to the device of the user is determined by a default way.

Preferably, if a plurality of pieces of push information is determined at a network side, it may be sent according to priorities, or may be sent in a random manner.

Obviously, at S103, the push information will override an original response during the call waiting period. For example, it will override ring-back music set by the calling party through the Mobile Communication.

Preferably, if a called party is called by the call request through a preset number, the sending the push information to the terminal may be performed in the following manner that: a call with the terminal is established, and the push information is sent to the terminal during the call. Preferably, upon receiving a request for interrupting the call sent from the user through the terminal, it is stopped sending the push information to the terminal.

Preferably, sending the push information to the terminal may be performed in the following manner: the push information is sent to the terminal as a ring-back tone before an indication of accepting the call request sent from the called party of the call request is received. Preferably, after the push information is sent to the terminal, the method further includes: upon receiving a connection response sent from the called party of the call request, it is stopped sending the push information to the terminal, and a call between the terminal and the called party is established.

Preferably, the information includes but not limited to: audio information, picture information, video information and even text messages. Format of the information depends on the application scenario. For example, for voice call such as ordinary mobile phones and fixed telephones, only audio information such as self-selected ring-back music and voice introduction of products may be adopted; for software calls such as 3rd-Generation (referred to as 3G) video calls, IM and Voice over Internet Protocol, audio information or video information, even picture information may be adopted; and when the network is not in a good condition, format of information with a low request for the network is selected as possible as it can be. Obviously, the IM includes, in addition to IM software at a conventional Personal Computer (referred to as PC), IM software at a mobile terminal, particularly IM software that is capable of sending short voice messages and performing real-time call through network traffic.

Preferably, contents of the information include but not limited to: music, introduction of products, activity information, introduction of geography, and the like.

Preferably, according to a demand of the device of the user, a feedback from the device of the user and a corresponding process to the feedback may be received while the push information is sent, to provide an interactive service.

Preferably, if the push information that needs to be sent is irrelevant to variable parameters such as the geographical location of the device of the user, S102 may be performed firstly, and S101 is then performed, to improve the sending efficiency.

Preferably, parameters such as listening time of respective push information that have been sent, feedback of the user are statistically calculated, to determine the sending effect of the information.

Referring to Fig.2, a method for establishing a call is provided by an embodiment of the present disclosure, including:
at S201, personalized information of a user is sent to a call center; and
at S202, after a call request is sent to the call center, push information corresponding to the personalized information of the user sent from the call center is received.

Preferably, the personalized information of the user includes:
a geographical location; and/or
a type of contents of desired push information preset by the user.

Preferably, the push information includes one or more kinds of the following information:
audio information, picture information and video information.

Embodiments of the present disclosure are given as follows.

### A first embodiment

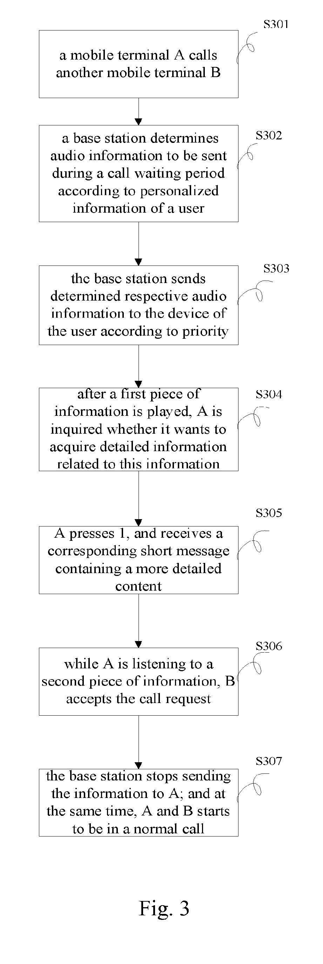

Referring to Fig.3, taking mobile terminals as an example, a process of establishing a call is as follows:
at S301, a mobile terminal A calls another mobile terminal B;
at S302, a base station determines audio information to be sent during a call waiting period according to personalized information of a user; for example, if A is located in a scenery area, voice introduction to the scenery area is sent to A; for another example, if it is determined that a type of contents of desired push information preset by A is sports, sports news information is played to A.

Preferably, the personalized information of the user includes: a geographical location; and/or a type of contents of desired push information preset by the user.

If the personalized information of the user is a geographical location, before the step S302, the process also includes:
the base station acquires a geographical location of the user.

Preferably, a manner in which the base station acquires a geographical location of the user may be that the terminal reports its geographical location, or that the base station locates the terminal through a mobile network.

At S303, the base station sends the determined respective audio information to the device of the user according to priority.

Preferably, a plurality of piece of information may be determined according to personalized information of the user. For example, when the user is located in a business area, advertisement information of a plurality of merchants may be pushed to the user, and the advertisement information may be prioritized by the advertisement fee rates of the plurality of merchants.

At S304, after a first piece of information is played, A is inquired whether it wants to acquire detailed information related to this information, if it wants, please press 1, and if it does not want, please press 0; and
at S305, A presses 1, and receives a corresponding short message containing a more detailed content.

At S306, while A is listening to a second piece of information, B accepts the call request; and
at S307, the base station stops sending the information to A; and at the same time, A and B starts to be in a normal call.

### A second embodiment

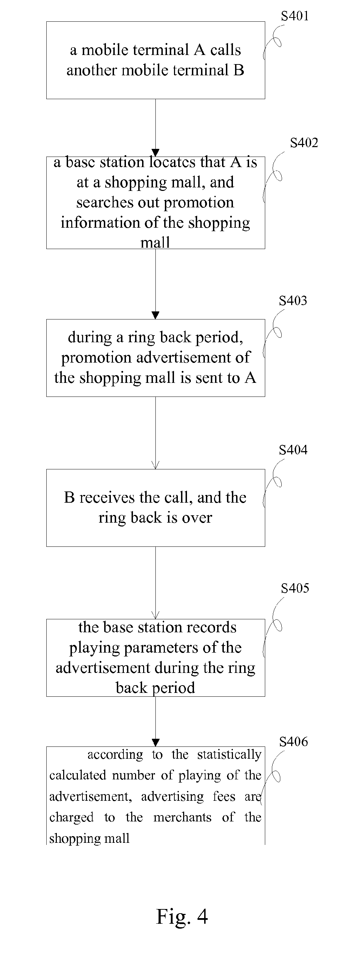

Referring to Fig.4, including the following steps:
at S401, a mobile terminal A calls another mobile terminal B;
at S402, a base station locates that A is at a shopping mall, and searches out promotion information of the shopping mall;
at S403, during a ring back period, promotion advertisement of the shopping mall is sent to A;
at S404, B receives the call, and the ring back is over;
at S405, the base station records playing parameters of the advertisement during the ring back period; and
at S406, according to the statistically calculated number of playing of the advertisement, advertising fees are charged to the merchants of the shopping mall.

Preferably, the base station may also calculate advertising fees in manners such as recording playing duration time of the advertisement and the like.

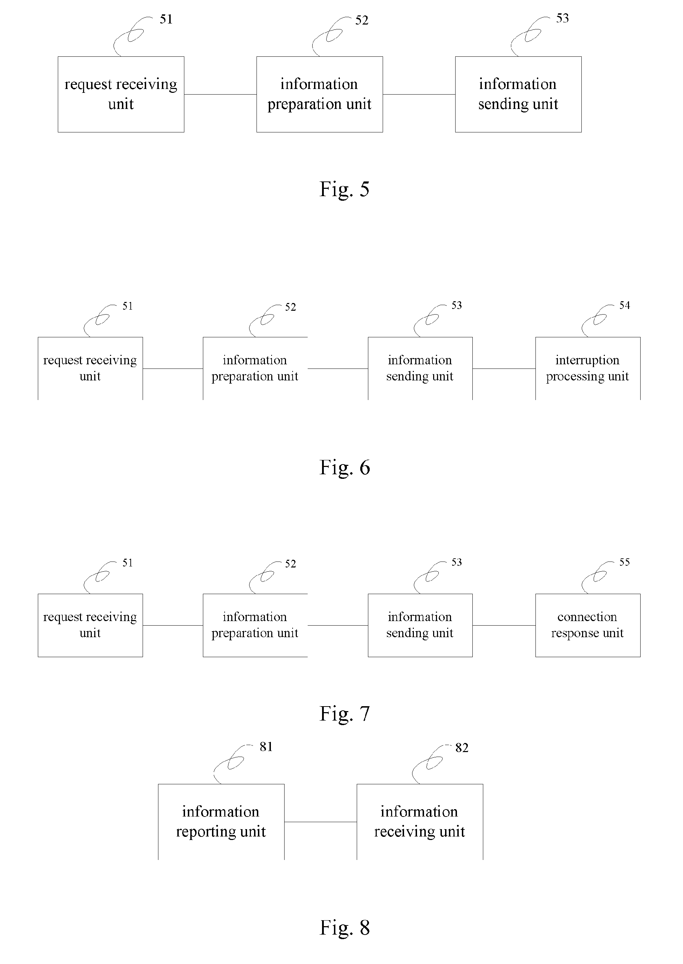

Referring to Fig.5, an apparatus for establishing a call is provided by the present disclosure, including:
a request receiving unit 51 configured to receive a call request sent from a user through a terminal;
an information preparation unit 52 configured to determine push information corresponding to personalized information of the user; and
an information sending unit 53,configured to send the push information to the terminal.

Preferably, the information preparation unit 52 is configured to:
acquire personalized information of the user; and
select push information corresponding to the personalized information of the user according to the personalized information of the user.

Preferably, the personalized information of the user includes:
a geographical location; and/or
a type of contents of push information preset by the user.

Preferably, if a called party is called by the call request through a preset number, the information sending unit 53 is configured to:
establish a call with the terminal, and send the push information to the terminal during the call.

Referring to Fig.6, preferably, the apparatus also includes:
an interruption processing unit 54 configured to stop sending the push information to the terminal upon receiving a request for interrupting the call sent from the user through the terminal.

Preferably, the information sending unit 53 is also configured to:
send the push information to the terminal as a ring-back tone before an indication of accepting the call request sent from the called party of the call request is received.

Referring to Fig.7, preferably, the apparatus also includes the following unit:
a connection response unit 55 is configured to stop sending the push information to the terminal, and establish a call between the terminal and the called party, upon receiving a connection response sent from the called party of the call request.

Preferably, the push information includes one or more kinds of the following information: audio information, picture information and video information.

Referring to Fig.8, an apparatus for establishing a call is provided by the present disclosure, including the following units:
an information reporting unit 81 is configured to send personalized information of a user to a call center; and
an information receiving unit 82 is configured to receive push information corresponding to the personalized information of the user sent from the call center after a call request is sent to the call center.

Preferably, the personalized information of the user includes:
a geographical location; and/or
a type of contents of desired push information preset by the user.

Preferably, the push information includes one or more kinds of the following information: audio information, picture information and video information.

A device is also provided by an embodiment of the present disclosure, the device including:
one or more processors;
a memory; and
one or more programs are stored in the memory and configured to be executable by the one or more processors, wherein, the one or more programs have the following functions of:
   receiving a call request sent from a user through a terminal;
   determining push information corresponding to personalized information of the user; and
   sending the push information to the terminal.

Preferably, the determining push information corresponding to personalized information of the user is performed in the following manner:
acquiring personalized information of the user; and
selecting push information corresponding to the personalized information of the user according to the personalized information of the user.

Preferably, the personalized information of the user includes:
a geographical location; and/or
a type of contents of desired push information preset by the user.

Preferably, if a called party is called by the call request through a preset number, the sending the push information to the terminal is performed in the following manner:
establishing a call with the terminal, and sending the push information to the terminal during the call.

Preferably, the one or more programs also have the following functions:
after the push information is sent to the terminal, stopping sending the push information to the terminal upon receiving a request for interrupting the call sent from the user through the terminal.

Preferably, the sending the push information to the terminal is performed in the following manner:
sending the push information to the terminal as a ring-back tone before an indication of accepting the call request sent from the called party of the call request is received.

Preferably, the one or more programs also have the following functions:
after the push information is sent to the terminal, stopping sending the push information to the terminal, and establishing a call between the terminal and the called party, upon receiving a connection response sent from the called party of the call request.

Preferably, the push information includes one or more kinds of the following information:
audio information, picture information and video information.

In addition, the present embodiment provides a nonvolatile readable storage medium, in which one or more programs are stored. When being applied in a device with a touch screen, the one or more programs may cause the device to execute instructions for performing the following steps:
receiving a call request sent from a user through a terminal;
determining push information corresponding to personalized information of the user; and
sending the push information to the terminal.

Preferably, the determining push information corresponding to personalized information of the user is performed in the following manner:
acquiring personalized information of the user; and
selecting push information corresponding to the personalized information of the user according to the personalized information of the user.

Preferably, the personalized information of the user includes:
a geographical location; and/or
a type of contents of desired push information preset by the user.

Preferably, if a called party is called by the call request through a preset number, the sending the push information to the terminal is performed in the following manner of:
establishing a call with the terminal, and sending the push information to the terminal during the call.

Preferably, the one or more programs may also cause the device to execute instructions for performing the following steps of:
after the push information is sent to the terminal, stopping sending the push information to the terminal upon receiving a request for interrupting the call sent from the user through the terminal.

Preferably, the sending the push information to the terminal is performed in the following manner:
sending the push information to the terminal as a ring-back tone before an indication of accepting the call request sent from the called party of the call request is received.

Preferably, the one or more programs may also cause the device to execute instructions for performing the following steps of:
after the push information is sent to the terminal, stopping sending the push information to the terminal, and establishing a call between the terminal and the called party, upon receiving a connection response sent from the called party of the call request.

Preferably, the push information includes one or more kinds of the following information:
audio information, picture information and video information.

A device is also provided by an embodiment of the present disclosure, the device including:
one or more processors;
a memory; and
one or more programs are stored in the memory and configured to be executable by the one or more processors, wherein, the one or more programs have the following functions:
sending personalized information of a user to a call center; and
receiving push information corresponding to the personalized information of the user sent from the call center after a call request is sent to the call center.

Preferably, the personalized information of the user includes:
a geographical location; and/or
a type of contents of desired push information preset by the user.

Preferably, the push information includes one or more kinds of the following information: audio information, picture information and video information.

In addition, the present embodiment provides a nonvolatile readable storage medium, in which one or more programs are stored. When being applied in a device with a touch screen, the one or more programs may cause the device to execute instructions for performing the following steps of:
sending personalized information of a user to a call center; and
receiving push information corresponding to the personalized information of the user sent from the call center after a call request is sent to the call center.

Preferably, the personalized information of the user includes:
a geographical location; and/or
a type of contents of desired push information preset by the user.

Preferably, the push information includes one or more kinds of the following information: audio information, picture information and video information.

Accordingly, a method, an apparatus and a device for establishing a call are provided by embodiments of the present disclosure, configured to send push information corresponding to personalized information to a user based on the personalized information of the user after the user initiates a call, avoiding a waste of communication resources.

It should be understood by those skilled in the art, that the embodiments of this disclosure may be provided as methods, systems or computer program products. Therefore, the disclosure may adopt embodiments in forms of hardware only, software only, or a combination of software and hardware. Furthermore, the disclosure may adopt forms of computer program products executable on one or more computer usable storage media (including but not being limited to disk storage and optical storage, etc.) containing computer usable program codes.

The disclosure is described in reference to the method, the device (system) and the flowchart and/or a block diagram of a computer program product according to the embodiments of the disclosure. It should be understood that each process and/or block in the flowcharts and/or block diagrams, and combinations of processes and/or blocks in the flowcharts and/or block diagrams, may be realized by computer program instructions. These computer program instructions may be provided to a generate-purpose computer, a special-purpose computer, an embedded processor, or processors of other programmable data processing devices, to create a machine, such that a device for realizing functions designated in one or more processes in the flowcharts and/or in one or more blocks in the block diagrams, may be created by instructions performed by a computer or processors of other programmable data processing devices.

These computer program instructions may further be stored in a computer readable storage that can boot a computer or other programmable data processing devices to work in a specific way, such that a manufactured goods including an instruction device may be created by the instructions stored in the said computer readable storage, and the said instruction device realizes the functions designated in one or more processes in the flowcharts and/or in one or more blocks in the block diagrams.

These computer program instructions may further be loaded into a computer or other programmable data processing devices, such that a series of operating steps may be performed on the computer or other programmable data processing devices, so as to generate processes realized by the computer, such that steps for realizing the functions designated in one or more processes in the flowcharts and/or in one or more blocks in the block diagrams may be provided by the instructions executable on the computer or other programmable data processing devices.

Apparently, those skilled in the art may make various modifications and variations to the disclosure without departing the spirit and scope of the disclosure. Thus, the disclosure intends to include these modifications and variations if they belong to the scope of the claims of the disclosure and the equivalent technology thereof.

## Claims

1. A method for establishing a call, **characterized in that**, the method comprises:
receiving a call request sent from a user through a terminal;
determining push information corresponding to personalized information of the user; and
sending the push information to the terminal.

2. The method of claim 1, **characterized in that**, the determining push information corresponding to personalized information of the user is performed in the following manner:
acquiring personalized information of the user; and
selecting push information corresponding to the personalized information of the user according to the personalized information of the user.

3. The method of claim 2, **characterized in that**, the personalized information of the user comprises:
a geographical location; and/or
a type of contents of desired push information preset by the user.

4. The method of claim 1, **characterized in that**, if a called party called by the call request is a preset number, the sending the push information to the terminal is performed in the following manner of:
establishing a call with the terminal, and sending the push information to the terminal on the call.

5. The method of claim 4, **characterized in that**, after the push information is sent to the terminal, the method further comprises:
stopping sending the push information to the terminal upon receiving a request for interrupting the call sent from the user through the terminal.

6. The method of claim 1, **characterized in that**, the sending the push information to the terminal is performed in the following manner of:
sending the push information to the terminal as a ring-back tone before an indication of accepting the call request sent from the called party of the call request is received.

7. The method of claim 6, **characterized in that**, after sending push information to the terminal, the method further comprises:
stopping sending the push information to the terminal, and establishing a call between the terminal and the called party, upon receiving a connection response sent from the called party of the call request.

8. The method of any one of claims 1 to 7, **characterized in that**, the push information comprises one or more kinds of the following information:
audio information, picture information and video information.

9. A method for establishing a call, **characterized in that**, the method comprises:
sending personalized information of a user to a call center; and
receiving push information corresponding to the personalized information of the user sent from the call center after a call request is sent to the call center.

10. The method of claim 9, **characterized in that**, the personalized information of the user comprises:
a geographical location; and/or
a type of contents of desired push information preset by the user.

11. The method of claim 9, **characterized in that**, the push information comprises one or more kinds of the following information:
audio information, picture information and video information.

12. An apparatus for establishing a call, **characterized in that**, the apparatus comprises:
a request receiving unit configured to receive a call request sent from a user through a terminal;
an information preparation unit configured to determine push information corresponding to personalized information of the user; and
an information sending unit configured to send the push information to the terminal.

13. The apparatus of claim 12, **characterized in that**, the information preparation unit is configured to:
acquire personalized information of the user; and
select push information corresponding to the personalized information of the user according to the personalized information of the user.

14. The apparatus of claim 13, **characterized in that**, the personalized information of the user comprises:
a geographical location; and/or
a type of contents of desired push information preset by the user.

15. The apparatus of claim 12, **characterized in that**, if a called party called by the call request is a preset number, the information sending unit is configured to:
establish a call with the terminal, and send the push information to the terminal during the call.

16. The apparatus of claim 15, **characterized in that**, the apparatus further comprises:
an interruption processing unit configured to stop sending the push information to the terminal upon receiving a request for interrupting the call sent from the user through the terminal.

17. The apparatus of claim 12, **characterized in that**, the information sending unit is further configured to:
send the push information to the terminal as a ring-back tone before an indication of accepting the call request sent from the called party of the call request is received.

18. The apparatus of claim 17, **characterized in that**, the apparatus further comprises:
a connection response unit configured to stop sending the push information to the terminal, and establish a call between the terminal and the called party, upon receiving a connection response sent from the called party of the call request.

19. The apparatus of any one of claims 12 to 18, **characterized in that**, the push information comprises one or more kinds of the following information:
audio information, picture information and video information.

20. An apparatus for establishing a call, **characterized in that**, the apparatus comprises:
an information reporting unit configured to send personalized information of a user to a call center; and
an information receiving unit, configured to receive push information corresponding to the personalized information of the user sent from the call center after a call request is sent to the call center.

21. The apparatus of claim 20, **characterized in that**, the personalized information of the user comprises:
a geographical location; and/or
a type of contents of desired push information preset by the user.

22. The apparatus of claim 20, **characterized in that**, the push information comprises one or more kinds of the following information:
audio information, picture information and video information.

23. A device, **characterized in that**, the device comprises:
one or more processors;
a memory; and
one or more modules are stored in the memory and configured to be executable by the one or more processors, **characterized in that**, the one or more modules have the following functions of:
receiving a call request sent from a user through a terminal;
determining push information corresponding to personalized information of the user; and
sending the push information to the terminal.

24. A device, **characterized in that**, the device comprises:
one or more processors;
a memory; and
one or more modules are stored in the memory and configured to be executable by the one or more processors, **characterized in that**, the one or more modules have the following functions of:
sending personalized information of a user to a call center; and
receiving push information corresponding to the personalized information of the user sent from the call center after a call request is sent to the call center.
